# EUROPÄISCHE PATENTANMELDUNG

(11) **EP 4 075 344 A1**
(43) Veröffentlichungstag der Anmeldung: **19.10.2022**
(21) Anmeldenummer: 21168879.1
(22) Anmeldetag: 16.04.2021
(51) Int. Cl.: G06N 3/08, G06N 3/04

(54) **COMPUTERIMPLEMENTIERTES VERFAHREN ZUM SORTIEREN EINER LISTE VON DATENOBJEKTEN, DATENVERARBEITUNGSANLAGE, SERVEREINHEIT, UND COMPUTERPROGRAMMPRODUKT**

(71) Anmelder: Synthetic Dimension GmbH, 5020 Salzburg (AT)
(72) Erfinder: Hieger, Florian, 5201 Seekirchen am Wallersee (AT); Debiasi, Luca, 5020 Salzburg (AT); Schoosleitner, Michael, 5020 Salzburg (AT); Huber, Martin, 5452 Pfarrwerfen (AT)
(74) Vertreter: Stolmár & Partner Patentanwälte PartG mbB

(57) **Zusammenfassung**

Es wird ein computerimplementiertes Verfahren zum Sortieren einer Liste von Datenobjekten vorgestellt, welche jeweils einen Einrichtungsgegenstand repräsentieren, nach einer Eignung, mit einem oder mehreren Einrichtungsgegenständen in einer vorgegebenen Szene kombiniert zu werden, wobei die Liste n Datenobjekte umfasst, mit den Schritten: a) Bereitstellen eines neuronalen Netzwerks, welches zur Abbildung einer Datenrepräsentation eines Einrichtungsgegenstandes in Form eines 2D- oder 3D-Bildes als Eingangsdaten auf eine Liste von stilbeschreibenden charakteristischen Eigenschaften als Ausgangsdaten trainiert ist, wobei das neuronale Netz eine Ausgabeschicht mit einer Mehrzahl von Ausgangsknoten aufweist, welche jeweils eine der charakteristischen Eigenschaften repräsentieren, und wobei das neuronale Netz eine verborgene Schicht mit m Zwischenknoten aufweist, welche jeweils mit jedem der Ausgangsknoten verknüpft sind; b) Bereitstellen von Aktivierungswerten a_{i,k}, mit i=1..n, k=1..m, wobei a_{i,k} einem Aktivierungswert des k-ten Zwischenknoten entspricht, wenn eine Datenrepräsentation des durch das i-te Datenobjekt repräsentierten Einrichtungsgegenstandes durch das neuronale Netzwerk abgebildet wird; c) Erzeugen oder Empfangen eine Datenrepräsentation der vorgegebenen Szene; d) Abbilden der Datenrepräsentation durch das neuronale Netzwerk, wobei jedem der m Zwischenknoten der verborgenen Schicht ein Aktivierungswert bₖ mit k=1..m zugeordnet wird; und e) Sortieren der n Datenobjekte nach einem Grad der Übereinstimmung zwischen den Aktivierungswerten a_{i,k} und bₖ.

## Beschreibung

Die Erfindung betrifft ein computerimplementiertes Verfahren zum Sortieren einer Liste von Datenobjekten, welche jeweils einen Einrichtungsgegenstand repräsentieren, nach einer Eignung, mit einem oder mehreren Einrichtungsgegenständen in einer vorgegebenen Szene kombiniert zu werden. Weiterhin betrifft die Erfindung eine Datenverarbeitungsanlage, eine Servereinheit, und ein Computerprogrammprodukt.

Moderne e-commerce-Anwendungen ermöglichen es Verbrauchern, mittels computergestützter Verfahren auf einen großen Bestand vor Artikeln eines oder mehrerer Anbieter zuzugreifen, um diese anzusehen, zu vergleichen, und ggf. zu erwerben.

Eine wesentliche Aufgabe besteht dabei darin, dem Verbraucher in einer Auswahlliste bevorzugt solche Artikel anzubieten, welche für den Verbraucher attraktiv sind. Dazu stehen mehrere Werkzeuge zur Verfügung.

Zum einen können Listen von Artikeln nach vorgegebenen Kriterien gefiltert und/oder sortiert werden. Beispielsweise kann eine Liste von Einrichtungsgegenständen zunächst nach bestimmten Arten von Artikeln, wie z.B. Sofas, Kleiderschränke, Bett, u.s.w, gefiltert werden. Weitere mögliche Filterkriterien sind z.B. Farbe, Stil, oder Material. Als Sortierkriterien kommen z.B. Preis, Abmessungen, und/oder Kundenbewertungen in Frage.

Als weiteres Werkzeug stehen intelligente Algorithmen zur Verfügung, die anhand von vorzugsweise anonymisiert gespeichertem früheren Nutzungsverhalten eines bestimmten Verbrauchers für jeden Artikel einer Liste eine Wahrscheinlichkeit ermitteln, dass dieser Artikel für den Verbraucher attraktiv ist. Diese Wahrscheinlichkeit kann dann als Sortierkriterium für eine sortierte Liste von Artikeln verwendet werden.

Es hat sich jedoch herausgestellt, dass die zur Verfügung stehenden Methoden gerade im Bereich der Inneneinrichtung unzureichend sind. Insbesondere datenbasierte Algorithmen sind hier nur begrenzt anwendbar, da einzelne Nutzer in der Regel nur sehr wenige Einrichtungsgegenstände kaufen und somit nur unzureichende Daten vorliegen. Zudem hängt die Eignung der Einrichtungsgegenstände auch stark davon ab, wie die übrige Einrichtung eines Raums ausgestaltet ist, in welchen der Gegenstand eingebracht werden soll. Dabei kann ein Nutzer nach Einrichtungsgegenständen für unterschiedliche Räume suchen, die unterschiedlich eingerichtet sind. Zwar können Listeneinträge für Einrichtungsgegenstände manuell oder computergestützt mit Stilangaben wie "Jugendstil", "Modern", "Bauhaus", o.ä. annotiert werden, dies ist jedoch aufwendig und führt nicht immer zu einem zufriedenstellenden Ergebnis. Zudem muss hier immer noch der Verbraucher die für den fraglichen Raum passende Stilangabe auswählen und manuell die Liste nach entsprechenden Stilangaben filtern, um nur relevante Ergebnisse zu erhalten.

Es besteht daher die Aufgabe darin, ein Verfahren bereitzustellen, welches eine bessere Sortierung einer Liste von Datenobjekten ermöglicht, welche Einrichtungsgenstände repräsentieren.

Diese Aufgabe wird erfindungsgemäß gelöst durch ein computerimplementiertes Verfahren zum Sortieren einer Liste von Datenobjekten, welche jeweils einen Einrichtungsgegenstand repräsentieren, nach einer Eignung, mit einem oder mehreren Einrichtungsgegenständen in einer vorgegebenen Szene kombiniert zu werden, wobei die Liste n Datenobjekte umfasst, mit den Schritten: a) Bereitstellen eines neuronalen Netzwerks, welches zur Abbildung einer Datenrepräsentation eines Einrichtungsgegenstandes in Form eines 2D- oder 3D-Bildes als Eingangsdaten auf eine Liste von stilbeschreibenden charakteristischen Eigenschaften als Ausgangsdaten trainiert ist, wobei das neuronale Netz eine Ausgabeschicht mit einer Mehrzahl von Ausgangsknoten aufweist, welche jeweils eine der charakteristischen Eigenschaften repräsentieren, und wobei das neuronale Netz eine verborgene Schicht mit m Zwischenknoten aufweist, welche jeweils mit jedem der Ausgangsknoten verknüpft sind; b) Bereitstellen von Aktivierungswerten a_{i,k}, mit i=1..n, k=1..m, wobei a_{i,k} einem Aktivierungswert des k-ten Zwischenknoten entspricht, wenn eine Datenrepräsentation des durch das i-te Datenobjekt repräsentierten Einrichtungsgegenstandes durch das neuronale Netzwerk abgebildet wird; c) Erzeugen oder Empfangen eine Datenrepräsentation der vorgegebenen Szene; d) Abbilden der Datenrepräsentation durch das neuronale Netzwerk, wobei jedem der m Zwischenknoten der verborgenen Schicht ein Aktivierungswert bₖ mit k=1..m zugeordnet wird; und e) Sortieren der n Datenobjekte nach einem Grad der Übereinstimmung zwischen den Aktivierungswerten a_{i,}k und bₖ.

Mit dem beschriebenen Verfahren kann eine automatische Analyse des Einrichtungsstils der Szene vorgenommen werden, in welche ein aus der Liste auszuwählender Einrichtungsgegenstand eingebracht werden soll. Die Szene kann dabei z.B. ein ganz oder teilweise eingerichteter Raum sein, für den ein weiteres Möbelstück oder Einrichtungsaccessoire ausgewählt werden soll.

Für die Analyse des Stils der Szene wird eine bildartige oder bildähnliche Datenrepräsentation der Szene erstellt oder empfangen. Z.B. kann ein Verbraucher ein Foto der Szene erstellen und über ein Netzwerk zur Verfügung stellen, so dass im Ablauf des Verfahrens das Foto empfangen und weiterverarbeitet wird. Das Foto kann zusätzliche Tiefendaten beinhalten, z.B. durch Kombination eines reinen Fotos mit den Daten eines LiDAR-Sensors, oder durch Aufnahme mit einer RGBT-Kamera oder TOF-Kamera.

Die Stilanalyse erfolgt durch ein trainiertes neurales Netzwerk. Dabei wird für die weitere Verarbeitung bei der Sortierung nicht eine Ausgangsschicht des neuronalen Netzwerkes verwendet, in welcher jeder Ausgangsknoten eine bestimmte stilbezogene Eigenschaft der Szene repräsentiert, sondern eine vorgelagerte verborgene Schicht, die als "fully connected layer" ausgeführt ist. Dabei ist jeder der m Zwischenknoten der Schicht mit jedem Ausgangsknoten verbunden. Die Aktivierungswerte der Zwischenknoten können somit als m-dimensionalen Vektor interpretiert werden. Dieser Vektor kann auch als "Stilvektor" bezeichnet werden.

Das erfindungsgemäße Verfahren ermittelt also für die vorgegebene Szene und für jedes Datenobjekt der zu sortierenden Liste eine Ausprägung dieses Stilvektors, und sortiert die Liste nach dem Grad der Übereinstimmung der Stilvektoren.

In einer möglichen Ausprägung eines Verfahrens nach der Erfindung kann in Schritt e) für jedes der n Datenobjekte ein Abstandswert dᵢ ermittelt werden, und die Datenobjekte können nach dem Abstandswert dᵢ sortiert werden. Der Abstandswert di kann nach der Formel dᵢ = f(∑(aᵢₖ-bₖ)²) berechnet werden. Dabei ist f(x) vorzugsweise eine streng monotone Funktion. In dem besonderen Fall, dass die Funktion f(x)=x^{1/2} ist, entspricht der Abstandswert dᵢ dem tatsächlichen Betrag eines Differenzvektors zwischen dem Stilvektor der Szene und dem Stilvektor des jeweiligen Datenobjekts der Liste. Für eine einfachere Berechnung kann für die Funktion f(x) die Identitätsfunktion f(x)=x gewählt werden. Da beide Funktionen streng monoton sind, hat dies auf das Ergebnis der Sortierung keinen Einfluss.

In einer bevorzugten Ausgestaltung eines Verfahrens nach der Erfindung kann das neuronale Netz ein faltendes neuronales Netz mit wenigsten einer Faltungsschicht, wenigstens einer Sammelschicht, einer Glättungsschicht, einer Einbettungsschicht und einer Ausgabeschicht sein oder umfassen. Faltende neuronale Netzwerke oder "Convolutional Neuronal Networks" CNN sind für die Verarbeitung von Bild- oder Bildähnlichen Daten besonders gut geeignet.

Die vorgegebene Szene kann einen einzigen Einrichtungsgegenstand umfassen. Beispielsweise kann ein Verbraucher als Datenrepräsentation ein Foto eines einzelnen Einrichtungsgegenstandes bereitstellen, zu welchem ein passender weiterer Einrichtungsgegenstand gesucht wird.

Die vorgegebene Szene kann p Einrichtungsgegenstände mit p > 1 umfassen. Bei einer Szene mit mehreren Einrichtungsgegenständen kann in Schritt d) die Datenrepräsentation der gesamten Szene, also mit allen Einrichtungsgegenständen, durch das neuronale Netz abgebildet werden.

Bevorzugt kann in Schritt d) die Datenrepräsentation der vorgegebenen Szene vor der Abbildung durch das neuronale Netzwerk in mehrere Datenrepräsentationen unterteilt wird, welche jeweils einen einzigen der p Einrichtungsgegenstände repräsentieren. Eine entsprechende Unterteilung oder Segmentierung kann durch klassische Bildverarbeitungsverfahren und/oder mittels eines weiteren neuronalen Netzes erfolgen.

Besonders bevorzugt kann dann in Schritt e) für jedes der n Datenobjekte der Liste ein Abstandswert d_{i,l} mit i=1..n und l=1..p zu jedem der p Einrichtungsgegenstände der vorgegebenen Szene ermittelt werden, und die Sortierung der Datenobjekte kann nach der Summe der Abstandswerte des jeweiligen Datenobjekts zu den Einrichtungsgegenständen der Szene oder nach dem kleinsten Abstandswert des jeweiligen Datenobjekts zu einem der Einrichtungsgegenstände der Szene erfolgen. Auf diese weise können entweder solche Einrichtungsgegenstände, die relativ gut zu allen Einrichtungsgegenständen der Szene passen, einen prominenten Platz in der Liste erhalten, oder solche Einrichtungsgegenstände, die besonders gut zu einem der Einrichtungsgegenstände in der Szene passen.

Die Aufgabe wird gemäß eines weiteren Aspekts der Erfindung gelöst durch eine Datenverarbeitungsanlage, umfassend einen Speicher, einen Prozessor, und einen Sensor, wobei der Sensor eingerichtet ist, eine Datenrepräsentation einer Szene in Form eines 2D- oder 3D-Bildes aufzunehmen; auf dem Speicher eine Liste von Datenobjekten, welche jeweils einen Einrichtungsgegenstand repräsentieren, und Datenrepräsentationen des jeweiligen Einrichtungsgegenstandes abgelegt ist; und weiterhin auf dem Speicher Programminstruktionen abgelegt sind, welche von dem Prozessor gelesen und ausgeführt werden können; wobei die Programminstruktionen bei Ausführung durch den Prozessor diesen veranlassen, auf der Datenverarbeitungsanlage ein Verfahren nach der obigen Beschreibung auszuführen.

Der Begriff "Programminstruktionen" kann dabei im Sinne der Erfindung explizit auch numerisch Parameter umfassen, welche Gewichte einzelner Knoten des neuronalen Netzes umfassen.

Der Sensor kann eine 2D- oder 3D-Kamera, einen LiDAR-Sensor, eine RGBT- und/oder eine TOF-Kamera umfassen.

Die Datenverarbeitungsanlage kann weiterhin eine Servereinheit und eine mobile Client-Einheit umfassen, welche jeweils einen Prozessor und einen Speicher umfassen, wobei Servereinheit und Client-Einheit eingerichtet sind, ein Verfahren nach der obigen Beschreibung als verteiltes Verfahren auszuführen, wobei eine erste Gruppe von Schritten auf der Servereinheit ausgeführt wird, und wobei eine zweite Gruppe von Schritten auf der Client-Einheit ausgeführt wird.

Dabei kann die Client-Einheit den Sensor umfassen. Die Client-Einheit kann weiterhin eingerichtet sein, die Datenrepräsentation der Szene aufzunehmen und an die Servereinheit zu übermitteln.

Die Aufgabe wird gemäß noch eines weiteren Aspekts der Erfindung gelöst durch eine Servereinheit einer Datenverarbeitungsanlage nach der obigen Beschreibung, die eingerichtet ist, eine Datenrepräsentation einer Szene in Form eines 2D- oder 3D-Bildes von einer Client-Einheit zu empfangen und ein Verfahren nach der obigen Beschreibung durchzuführen.

Die Aufgabe wird gemäß noch eines weiteren Aspekts der Erfindung gelöst durch ein Computerprogrammprodukt, umfassend Programminformationen, die einen Prozessor einer Datenverarbeitungsanlage oder einer Servereinheit nach den obigen Ausführungen, dazu veranlassen, ein Verfahren nach der obigen Beschreibung durchzuführen.

Die Erfindung wird nachfolgend anhand einiger exemplarischer Ausführungsbeispiele und Abbildungen näher erläutert. Dabei sollen die Ausführungsbeispiele lediglich zum besseren Verständnis der Erfindung beitragen, ohne diese einzuschränken.

Es zeigen:
Fig. 1: Ein System zur Bereitstellung einer sortierten Liste von Datenobjekten,
Fig. 2: ein neuronales Netz.

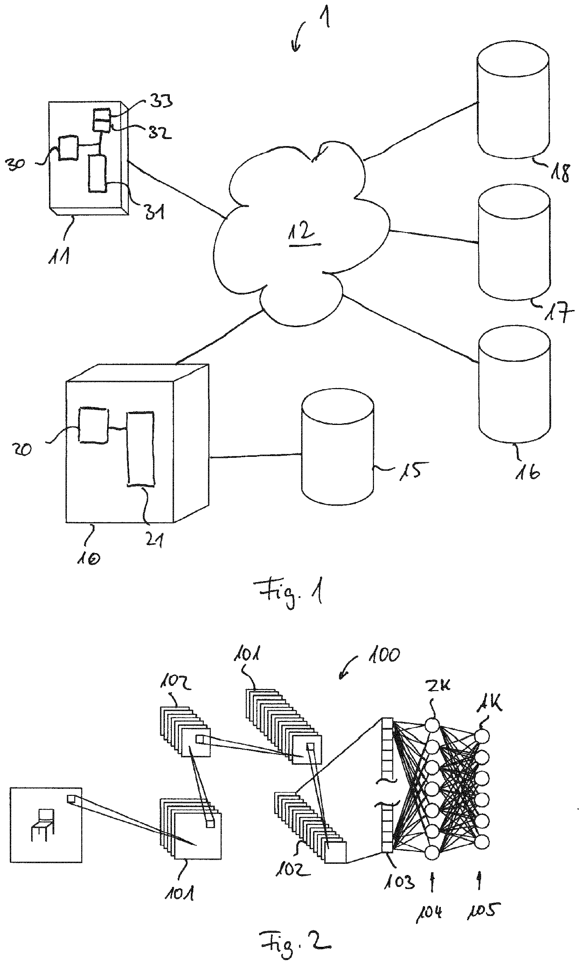

In Figur 1 ist ein System 1 zur Bereitstellung einer sortierten Liste von Datenobjekten dargestellt. Das System 1 umfasst einen Server 10 und ein mobiles Endgerät 11. Server 10 und Endgerät 11 sind über ein Netzwerk 12, beispielsweise das Internet, miteinander verbunden, um untereinander Daten auszutauschen.

Der Server 10 ist weiterhin mit einer Datenbank 15 verbunden, in welcher eine Anzahl von Datenobjekten hinterlegt ist. Über das Netzwerk 12 kann der Server mit weiteren Datenbanken 16, 17, 18 verbunden sein, auf welchen weitere Datenobjekte hinterlegt sind.

Der Server 10 umfasst einen Prozessor 20 und einen Speicher 21. Das Endgerät 11 umfasst einen Prozessor 30, einen Speicher 31, und Sensoren 32, 33.

Bei den Datenobjekten kann es sich um Repräsentationen von Einrichtungsgegenständen handeln, welche durch den Server 10 zu einer Liste zusammengestellt und an das Endgerät 11 übermittelt werden sollen, um dort einem Benutzer angezeigt zu werden. Die Anzeige der Liste auf dem Endgerät 11 kann im Rahmen einer Benutzeroberfläche erfolgen, über welche der Benutzer einen oder mehrere der Einrichtungsgegenstände, welche durch die Datenobjekte repräsentiert werden, erwerben kann. Die Benutzeroberfläche kann Teil eines Webshops sein. Die Einrichtungsgegenstände können beispielsweise Möbelstücke oder Wohnaccessoires sein.

Die Datenobjekte beinhalten relevante Informationen über die jeweiligen Einrichtungsgegenstände. Dies können beispielsweise Preisinformationen, Größeninformationen oder mögliche Bezugsquellen sein. Weiterhin beinhalten die Datenobjekte ein oder mehrere Bilder des jeweiligen Einrichtungsgegenstands. Die Datenobjekte können zusätzlich ein 3D-Modell des Einrichtungsgegenstands beinhalten, z.B. als Punktwolke oder Polygongitter.

Um einem Benutzer des Endgeräts 11 die Auswahl eines passenden Einrichtungsgegenstands zu erleichtern ist der Server 10 eingerichtet, die Liste der Datenobjekte vor der Übermittlung an das Endgerät 11 zu sortieren. Um bei der Sortierung der Liste stilbezogene Merkmale der jeweiligen Einrichtungsgegenstände berücksichtigen zu können, ist auf dem Server ein neuronales Netz 100 implementiert, welches in Figur 2 schematisch dargestellt ist. Das neuronale Netz 100 ist als Software implementiert. Dazu sind Programminformationen im Speicher 21 des Servers 10 hinterlegt, welche den Prozessor 20 des Servers veranlassen, die Funktionen des neuronalen Netzes 100 auszuführen. Zusätzlich sind auf dem Speicher 21 des Servers Parameter wie Gewichte der einzelnen Knoten des neuronalen Netzes 100 hinterlegt.

Bei dem neuronalen Netz 100 handelt es sich um ein faltendes neuronales Netz, welches auch als "Convolutional Neural Network" CNN bekannt ist. Es umfasst wechselweise eine oder mehrere Faltungsschichten 101 ("convolution layers") und eine oder mehrere Sammelschichten 102 ("pooling layers"), eine Glättungsschicht 103 ("flattening layer"), eine Einbettungsschicht 104 ("embedding layer"), sowie eine Ausgabeschicht 105.

Das neuronale Netz 100 ist eingerichtet und trainiert, eine Datenrepräsentation eines oder mehrerer Einrichtungsgegenstände auf eine Anzahl von stilbeschreibenden charakteristischen Merkmalen abzubilden. Dazu wird ein Katalog von stilbeschreibenden Merkmalen definiert, und für jedes der Merkmale wird ein Ausgangsknoten AK in der Ausgabeschicht 105 des neuronalen Netzwerks 100 vorgesehen. Als Merkmale können beispielsweise Stilepochen wie "Barock", "Moderne" oder "Jugendstil", Stilrichtungen wie "Bauhaus", "Tiffany", "Kolonialstil" oder "Industriell", Materialangaben wie "Glas", "Stahl", "Wurzelholz" oder "Leder", oder Farben wie "rot", "gelb" oder "anthrazit" angegeben sein.

Anschließend wird ein Trainingsdatensatz mit einer großen Anzahl von Datenrepräsentationen echter Einrichtungsgegenstände und/oder simulierten Datenrepräsentationen bereitgestellt, wobei jede Datenrepräsentation mit zutreffenden stilbeschreibenden Merkmalen annotiert ist. Die Annotierung kann als "one hot encoding" erfolgen, wobei jedem Merkmal entweder der Wert "0" oder der Wert "1" zugewiesen wird.

Die Datenrepräsentationen werden nun durch das neuronale Netz 100 abgebildet, und Gewichte der Knoten des neuronalen Netzes 100 werden angepasst, um die für jede Datenrepräsentation annotierten Merkmale jeweils möglichst gut abzubilden. Dieser Vorgang wird auch als "überwachtes Lernen" bezeichnet.

Während das so trainierte neuronale Netzwerk 100 mit hoher Genauigkeit einem Einrichtungsgegenstand, dessen Datenrepräsentation durch das neuronale Netzwerk 100 abgebildet wird, zutreffende charakteristische Eigenschaften zuordnen kann, ist diese Art der Zuordnung für einen Sortiervorgang nicht gut geeignet.

Stattdessen werden in der weiteren Ausführung des hier beschriebenen Verfahrens die Aktivierungswerte der Zwischenknoten ZK der Einbettungsschicht 104 ausgewertet. Dabei werden die Aktivierungswerte der Zwischenknoten ZK als m-Dimensionaler Vektor betrachtet, wobei m die Anzahl der Zwischenknoten ZK in der Einbettungsschicht 104 ist. Dieser Vektor kann auch als "Stilvektor" SV bezeichnet werden.

Das Ergebnis des Trainingsprozesses ist hier, dass die Abbildung von Datenrepräsentationen zweier Einrichtungsobjekte, die sich stilistisch ähneln, auch ähnliche Stilvektoren SV ergibt. Die Abbildung in ein vieldimensionales Kontinuum ermöglicht dabei eine mathematische Bestimmung der stilistischen Ähnlichkeit, ohne dass qualitative Unterschiede zwischen disktreten Merkmalen in Beziehung zueinander gesetzt werden müssen. So ist es für die beschriebene Auswertung nicht erforderlich zu bestimmen, ob ein Materialunterschied zwischen Buchenholz und Leder für die Stilbestimmung relevanter ist als ein Unterschied zwischen den Stilrichtungen "Bauhaus" und "Industriell".

Der Server 10 kann nun in der Datenbank 15 gespeicherte Datenelemente laden und für jedes Datenelement eine hinterlegte Datenrepräsentation abrufen und durch das neuronale Netz 100 abbilden, um den Stilvektor SV_{E} des entsprechenden Einrichtungsgegenstandes zu bestimmen. Der Stilvektor SV_{E} kann dann zusammen mit einer Verlinkung auf das jeweilige Datenelement auf dem Server 10 zwischengespeichert werden. Auf diese Weise wird auf dem Server 10 eine Liste von Datenelementen erstellt.

Falls der Server 10 über schreibenden Zugriff auf die Datenbank 15 verfügt, kann der Stilvektor SV_{E} auch dauerhaft zu jedem Datenelement der Datenbank 15 gespeichert werden. Dies wird in der Regel der Fall sein, wenn sich die Datenbank 15 im Einflussbereich eines Betreibers des Servers 10 befindet. Bei Datenbanken 16, 17, 18 außerhalb des Einflussbereichs des Betreibers wird dies in der Regel nicht der Fall sein. Eine entsprechende Konstellation wird z.B. anzutreffen sein, wenn der Betreiber des Servers 10 als Makler fungiert, der von unterschiedlichen Anbietern angebotene Produkte in einem Webshop zusammenfasst.

Ein Nutzer, der über das Endgerät 11 einen Einrichtungsgegenstand beispielsweise für ein bereits ganz oder teilweise eingerichtetes Zimmer, das in diesem Zusammenhang als Szene bezeichnet wird, erwerben möchte, kann nun mit dem Endgerät 11 eine Datenrepräsentation der Szene aufnehmen. Dazu ist das Endgerät 11 mit einem oder mehreren Sensoren 32, 33 ausgestattet, beispielsweise mit einer RGB-Kamera zur Aufnahme von Farbbildern und mit einem LiDAR-Sensor zur gleichzeitigen Aufnahme von Tiefendaten. Die Datenrepräsentation kann auch ein einfaches 2D-Farbbild sein, oder ein mittels einer RGBT- oder TOF-Kamera aufgenommenes Bild mit Tiefendaten. Die Datenrepräsentation kann dann an den Server 10 übermittelt werden, wo sie durch das neuronale Netz 100 abgebildet wird, um ebenfalls einen Stilvektor SV_{S} der Szene zu ermitteln. Auf dem Speicher 31 des Endgeräts 32 sind Programminformationen hinterlegt, welche bei Ausführung durch den Prozessor 30 das Endgerät veranlassen, eine Datenrepräsentation mittels der Sensoren 32, 33 aufzunehmen und an den Server 10 zu übermitteln.

Auf dem Server 10 kann nun für jedes gespeicherte Datenelement ein Übereinstimmungswert d zwischen dem Stilvektor SV_{E} für das jeweilige Datenelement und dem Stilvektor SV_{S} für die Szene bestimmt werden. Als ein Maß für die Übereinstimmung der Stilvektoren SV_{E} und SV_{S} bietet sich der Betrag eines Differenzvektors |DV| = |SV_{E} - SV_{S}| an. Der Betrag des Differenzvektors |DV| ergibt sich dabei aus der Formel |DV| = (∑(aₖ-bₖ)²)^{1/2}, mit k = 1 .. m, wobei aₖ die Komponenten des Stilvektors SV_{E} und bₖ die Komponenten des Stilvektors SV_{S} sind.

Da im Folgenden der Übereinstimmungswert lediglich für die Sortierung der Liste der Datenelemente verwendet werden soll, kann anstelle des genauen Werts (∑(aₖ-bₖ)²)^{1/2} auch eine streng monotone Abbildung f(∑(aₖ-bₖ)²) verwendet werden, so dass auf das Ziehen der Wurzel verzichtet werden kann.

Es wird nun für jedes der n Datenelemente der Liste der Übereinstimmungswert dᵢ = f(∑(aᵢₖ-bₖ)²) mit i = 1 .. n ermittelt. Die Liste kann dann aufsteigend mit dᵢ als Sortierkriterium sortiert werden. Die sortierte Liste kann dann an das Endgerät 11 übertragen und dort dem Benutzer angezeigt werden. Der Benutzer bekommt also zunächst die Datenelemente der Liste angeboten, deren Stil dem Stil der vom Benutzer aufgenommenen Szene ähnelt.

Anstelle des hier beschriebenen Übereinstimmungswerts d kann die Übereinstimmung der Stilvektoren SV_{E} und SV_{S} auch auf andere Art erfolgen. Beispielsweise kann ein Skalarprodukt SP = SV_{E}·SV_{S} = ∑aₖ·bₖ verwendet werden. Das Skalarprodukt SP ist besonders groß, wenn die Stilvektoren SV_{E} und SV_{S} parallel sind. Werden die Stilvektoren SV_{E} und SV_{S} zusätzlich normiert, so zeigt das Skalarprodukt SP direkt den Kosinus eines Winkels zwischen den Stilvektoren SV_{E} und SV_{S} an.

Bei einer großen Anzahl von Datenobjekten in der Liste kann auf Basis der Stilvektoren SV_{E} ein Clustering durchgeführt werden. Mittels bekannter Verfahren wie "desity-based spatial clustering of applications with noise" (DBSCAN) oder spektralem Clustering können die Datenelemente der Liste in einzelne Cluster von Datenelementen unterteilt werden, welche jeweils sehr ähnliche Stilvektoren SV_{E} aufweisen. Die weitere Auswertung und Sortierung der Liste kann dann auf solche Datenelemente beschränkt werden, deren Stilvektor SV_{E} sich in dem gleichen Cluster befinden wie der Stilvektor SV_{S} der Szene.

Besonderheiten bei dem beschriebenen Verfahren ergeben sich, wenn in der vom Benutzer aufgenommenen Szene mehrere Einrichtungsgegenstände vorhanden sind. Diese weisen mit hoher Wahrscheinlichkeit unterschiedliche Stilvektoren SV_{E} auf. In diesem Fall gibt es für die Datenverarbeitung mehrere Möglichkeiten.

In einem ersten möglichen Ansatz kann für alle Einrichtungsgegenstände der Szene ein einziger Stilvektor SV_{S} ermittelt werden, welcher der weiteren Verarbeitung zugrunde gelegt wird. Hierbei werden solche Datenelemente vordere Plätze in der Liste einnehmen, welche zu allen Einrichtungsgegenständen der Szene passen. Hierbei kann jedoch das Problem auftreten, dass der für die Szene ermittelte Stilvektor SV_{S} insgesamt einen geringen Betrag aufweist, weil keine Stilparameter in der Szene dominant hervortreten. In diesem Fall würde ein für Datenelemente der Liste ermittelter Übereinstimmungswert d im Wesentlichen dem Betrag der Stilvektors SV_{E} entsprechen, und somit kleinen Rückschluss mehr auf eine stilistische Ähnlichkeit mehr erlauben.

In einem zweiten möglichen Ansatz kann die Datenrepräsentation der Szene zuerst in einzelne Elemente repräsentierende Gruppen von Daten unterteilt werden. Hierzu können klassische Bildverarbeitungsverfahren oder KI-Verfahren verwendet werden. Beides ist dem Fachmann hinlänglich bekannt und soll hier nicht weiter ausgeführt werden. Für eine Szene mit p Einrichtungsgegenständen können dann separat p Stilvektoren SV_{S,l} mit I = 1 .. p bestimmt werden, für die dann ebenfalls p Übereinstimmungswerte dₗ ermittelt werden können. Für die Sortierung der Liste kann dann beispielsweise jeweils das kleinste dₗ verwendet werden, um zu wenigstens einem Einrichtungsgegenstand der Szene eine hohe Stilähnlichkeit zu fordern. Wenn stattdessen jeweils das größte dₗ verwendet, so kann durch die Sortierung erreicht werden, dass jeweils die schlechteste Stilähnlichkeit zu einem der Einrichtungsgegenstände der Szene berücksichtigt, was zu einer harmonischeren Zusammenstellung führen kann. Alternativ kann ein Mittelwert, z.B. ein linearer oder quadratischer Mittelwert, aller Übereinstimmungswerte dₗ für die Sortierung herangezogen werden.

Wenn gemäß dem zweiten Ansatz die Datenrepräsentation der Szene in einzelne Einrichtungsgegenstände segmentiert wird, kann dem Benutzer auch eine Auswahl eines oder mehrerer Einrichtungsgegenstände in der Szene ermöglicht werden, um nur diese Einrichtungsgegenstände für die Stilbestimmung zu verwenden, oder um diese von der Stilbestimmung auszuschließen. Hierdurch kann der Benutzer kontrollieren, welche Einrichtungsgegenstände sich auf die Sortierung der Liste auswirken.

Zur Ausführung der zuvor beschriebenen Funktionen sind ebenfalls Programminstruktionen in den Speichern 21, 31 des Servers 10 und/oder des Endgeräts 11 hinterlegt. Dabei kann die Aufteilung der einzelnen Funktionen zwischen dem Server 10 und dem Endgerät 11 je nach Leistungsfähigkeit des Endgeräts 11 variiert werden. In einem Extremfall würde dabei das Endgerät 11 lediglich zum Aufnehmen der Datenrepräsentationen und zum Anzeigen der Liste der Datenelemente dienen. In einem anderen Extremfall könnten sämtliche Funktionen, ggf. mit Ausnahme des Bereitstellens einer unsortierten Liste von Datenelementen, durch das Endgerät 11 ausgeführt werden.

## Patentansprüche

1. Computerimplementiertes Verfahren zum Sortieren einer Liste von Datenobjekten, welche jeweils einen Einrichtungsgegenstand repräsentieren, nach einer Eignung, mit einem oder mehreren Einrichtungsgegenständen in einer vorgegebenen Szene kombiniert zu werden, wobei die Liste n Datenobjekte umfasst, mit den Schritten:
a) Bereitstellen eines neuronalen Netzwerks, welches zur Abbildung einer Datenrepräsentation eines Einrichtungsgegenstandes in Form eines 2D- oder 3D-Bildes als Eingangsdaten auf eine Liste von stilbeschreibenden charakteristischen Eigenschaften als Ausgangsdaten trainiert ist, wobei das neuronale Netz eine Ausgabeschicht mit einer Mehrzahl von Ausgangsknoten aufweist, welche jeweils eine der charakteristischen Eigenschaften repräsentieren, und wobei das neuronale Netz eine verborgene Schicht mit m Zwischenknoten aufweist, welche jeweils mit jedem der Ausgangsknoten verknüpft sind;
b) Bereitstellen von Aktivierungswerten a_{i,k}, mit i=1..n, k=1..m, wobei a_{i,k} einem Aktivierungswert des k-ten Zwischenknoten entspricht, wenn eine Datenrepräsentation des durch das i-te Datenobjekt repräsentierten Einrichtungsgegenstandes durch das neuronale Netzwerk abgebildet wird;
c) Erzeugen oder Empfangen eine Datenrepräsentation der vorgegebenen Szene;
d) Abbilden der Datenrepräsentation durch das neuronale Netzwerk, wobei jedem der m Zwischenknoten der verborgenen Schicht ein Aktivierungswert bₖ mit k=1..m zugeordnet wird; und
e) Sortieren der n Datenobjekte nach einem Grad der Übereinstimmung zwischen den Aktivierungswerten a_{i,k} und bₖ.

2. Verfahren nach Anspruch 1, **dadurch gekennzeichnet, dass** in Schritt e) für jedes der n Datenobjekte ein Abstandswert dᵢ ermittelt wird, und dass die Datenobjekte nach dem Abstandswert dᵢ sortiert werden.

3. Verfahren nach Anspruch 1 oder 2, **dadurch gekennzeichnet, dass** das neuronale Netz ein faltendes neuronales Netz mit wenigsten einer Faltungsschicht, wenigstens einer Sammelschicht, einer Glättungsschicht, einer Einbettungsschicht und einer Ausgabeschicht ist oder umfasst.

4. Verfahren nach einem der vorangehenden Ansprüche, **dadurch gekennzeichnet, dass** die vorgegebene Szene einen einzigen Einrichtungsgegenstand umfasst.

5. Verfahren nach einem der Ansprüche 1 bis 3, **dadurch gekennzeichnet, dass** die vorgegebene Szene p Einrichtungsgegenstände mit p > 1 umfasst.

6. Verfahren nach Anspruch 5, **dadurch gekennzeichnet, dass** in Schritt d) die Datenrepräsentation der vorgegebenen Szene vor der Abbildung durch das neuronale Netzwerk in mehrere Datenrepräsentationen unterteilt wird, welche jeweils einen einzigen der p Einrichtungsgegenstände repräsentieren.

7. Verfahren nach Anspruch 6, **dadurch gekennzeichnet, dass** in Schritt e) für jedes der n Datenobjekte der Liste ein Abstandswert d_{i,l} mit i=1..n und l=1..p zu jedem der p Einrichtungsgegenstände der vorgegebenen Szene ermittelt wird, und dass die Sortierung der Datenobjekte nach der Summe der Abstandswerte des jeweiligen Datenobjekts zu den Einrichtungsgegenständen der Szene oder nach dem kleinsten Abstandswert des jeweiligen Datenobjekts zu einem der Einrichtungsgegenstände der Szene erfolgt.

8. Datenverarbeitungsanlage, umfassend einen Speicher, einen Prozessor, und einen Sensor, wobei
- der Sensor eingerichtet ist, eine Datenrepräsentation einer Szene in Form eines 2D- oder 3D-Bildes aufzunehmen;
- auf dem Speicher eine Liste von Datenobjekten, welche jeweils einen Einrichtungsgegenstand repräsentieren, und Datenrepräsentationen des jeweiligen Einrichtungsgegenstandes abgelegt ist; und
- weiterhin auf dem Speicher Programminstruktionen abgelegt sind, welche von dem Prozessor gelesen und ausgeführt werden können;
- wobei die Programminstruktionen bei Ausführung durch den Prozessor diesen veranlassen, auf der Datenverarbeitungsanlage ein Verfahren nach einem der Ansprüche 1 bis 7 auszuführen.

9. Datenverarbeitungsanlage nach Anspruch 8, **dadurch gekennzeichnet, dass** die Datenverarbeitungsanlage eine Servereinheit und eine mobile Client-Einheit umfasst, welche jeweils einen Prozessor und einen Speicher umfassen, wobei Servereinheit und Client-Einheit eingerichtet sind, ein Verfahren nach einem der Ansprüche 1 bis 7 als verteiltes Verfahren auszuführen, wobei eine erste Gruppe von Schritten auf der Servereinheit ausgeführt wird, und wobei eine zweite Gruppe von Schritten auf der Client-Einheit ausgeführt wird.

10. Datenverarbeitungsanlage nach Anspruch 9, **dadurch gekennzeichnet, dass** die Client-Einheit den Sensor umfasst.

11. Datenverarbeitungsanlage nach Anspruch 10, **dadurch gekennzeichnet, dass** die Client-Einheit eingerichtet ist, die Datenrepräsentation der Szene aufzunehmen und an die Servereinheit zu übermitteln.

12. Servereinheit einer Datenverarbeitungsanlage nach einem der Ansprüche 9 bis 11, **dadurch gekennzeichnet, dass** die Servereinheit eingerichtet ist, eine Datenrepräsentation einer Szene in Form eines 2D- oder 3D-Bildes von einer Client-Einheit zu empfangen und ein Verfahren nach einem der Ansprüche 1 bis 7 durchzuführen.

13. Computerprogrammprodukt, umfassend Programminformationen, die einen Prozessor einer Datenverarbeitungsanlage nach einem der Ansprüche 8 bis 11, oder einer Servereinheit nach Anspruch 12, dazu veranlassen, ein Verfahren nach einem der Ansprüche 1 bis 7 durchzuführen.
